# FASCICULE DE BREVET EUROPEEN

(11) **EP 1 989 111 B1**
(45) Date de publication et mention de la délivrance du brevet: **30.10.2019**
(21) Numéro de dépôt: 07704712.4
(22) Date de dépôt: 26.02.2007
(51) Int. Cl.: B64G 1/00, B64G 1/24, B64G 1/64

(54) **DISPOSITIF D'AEROFREINAGE DE SATELLITE**
SATELLITENLUFTBREMSVORRICHTUNG
SATELLITE AIR BRAKE DEVICE

(30) Priorité: 27.02.2006 FR 0650660
(43) Date de publication de la demande: 12.11.2008
(73) Titulaire: Centre National d'Etudes Spatiales (C.N.E.S.), 75001 Paris (FR)
(72) Inventeur: DUPUY, Christian, F-31140 St Loup Cammas (FR); BOUSQUET, Pierre William, F-31750 Escalquens (FR)
(74) Mandataire: Delorme, Nicolas
(86) Numéro de dépôt international: PCT/EP2007/051791
(87) Numéro de publication internationale: WO 2007/096428

(56) Documents cités:
- EP-A2- 1 283 168
- US-B1- 6 830 222

## Description

La présente invention concerne un dispositif d'aérofreinage de satellite particulièrement adapté à la désorbitation des satellites en fin de vie.

Les satellites en fin de vie encombrent l'espace proche et, du fait qu'en haute altitude la pression d'air est très réduite, ces satellites atteignant la fin de vie de leur service sont susceptibles de rester en orbite de longues années et ainsi d'encombrer l'espace et de causer des risques de collision et de destruction des autres satellites.

Pour fixer les idées un satellite d'un rapport surface projetée sur masse de l'ordre de 5 à 6 millièmes de m²/kg en orbite à une altitude de 700 Km mettra de l'ordre de 45 ans pour descendre à une altitude à laquelle il sera détruit or certaines agences spatiales imposent maintenant une durée de vie maximale de 25 ans aux satellites en orbite basse ayant rempli leur mission.

Sans moyens de désorbitation, cette durée maximale interdirait une orbite supérieure à 650 km à un satellite ayant un rapport surface projetée sur masse tel que défini précédemment.

Aussi, les exploitants de satellites s'efforcent de limiter la durée de vie des satellites après la fin de leur service en prévoyant des systèmes les déplaçant de leur orbite pour les désorbiter ou les positionner sur une orbite différente de fin de vie.

Les procédés de désorbitation sont basés sur le principe d'une rentrée dans l'atmosphère forcée du satellite en fin de vie.

Deux cas de figure se présentent en général.

Soit, selon un premier type d'orbite, le satellite est sur une orbite elliptique possédant un périgée dans les couches denses de l'atmosphère. Dans un tel cas la désorbitation se fait naturellement en quelques jours ou quelques heures.

Soit, selon un second type d'orbite, le satellite se trouve sur une orbite stable ne traversant pas les couches denses et la désorbitation naturelle prend un temps très long comme vu précédemment.

Dans le cas d'un satellite effectuant sa mission sur une orbite pour laquelle la retombée naturelle du satellite est jugée trop lointaine, la solution la plus courante pour accélérer la désorbitation du satellite est d'abaisser son orbite en lui donnant une impulsion à l'aide de propulseurs.

L'inconvénient est qu'il faut conserver une quantité de combustible, et une énergie suffisante pour permettre cette impulsion, jusqu'à une phase de vie avancée du satellite.

De plus lorsque ces propulseurs ne sont pas utiles à la mission du satellite, ils constituent un poids parasite pour la mise en orbite du satellite, ainsi qu'une masse et un volume inutile au long de la mission.

En outre, la mise en oeuvre de cette impulsion doit se faire alors que le satellite pourrait ne plus avoir qu'une capacité fonctionnelle résiduelle ce qui impose de lui conserver des facultés de manoeuvre au delà de sa durée de vie normale.

Un moyen alternatif est l'aérofreinage.

Le principe de l'aérofreinage est connu du document US 6 550 720 qui décrit des moyens permettant en particulier de modifier l'orbite d'un satellite et de transférer une charge utile depuis une orbite géostationnaire à 36000 km jusqu'à une orbite basse et qui utilise le passage de la charge dans les couches hautes de l'atmosphère afin de circulariser son orbite.

Ce principe d'aérofreinage utilisé pour modifier l'orbite d'une charge ou d'un satellite a été par ailleurs utilisé dans le cadre de la mission de la sonde "Mars global surveyor" pour circulariser l'orbite initialement très elliptique de la sonde en la faisant passer dans la partie haute de l'atmosphère martienne.

Ce principe d'aérofreinage est en outre utilisé pour des procédures de rentrée dans l'atmosphère où le freinage est beaucoup plus violent et nécessite un bouclier thermique.

L'aérofreinage est efficace aux altitudes où l'atmosphère est relativement dense et, pour l'utiliser à des altitudes plus importantes que les couches hautes de l'atmosphère, il est nécessaire d'accroître la surface de traînée du satellite afin d'utiliser l'effet de freinage, même très faible, de l'atmosphère résiduelle présente sur les orbites hautes.

Pour cela, le document US 6 550 720 décrit de réaliser des grandes voiles en forme de parapluie adaptée pour conférer une stabilité au satellite et une position particulière de ce satellite sur sa trajectoire.

De telles voiles sont difficile à mettre en oeuvre du fait du volume important qu'elles occupent repliées et de leur surface importante.

Par exemple, selon le document US 6 550 720, pour freiner un satellite de l'ordre de 600 kg à une altitude seulement de 150 km une voile de l'ordre de 150 m² est nécessaire.

D'autre part il est nécessaire de prévoir plusieurs montants ou mâts devant se déployer pour maintenir de telles voiles ouvertes.

Enfin, de telles voiles fonctionnent selon une direction privilégiée pour laquelle le satellite doit être stabilisé et, si le satellite est orienté défavorablement par rapport à la voile, ou si le satellite tourne sur lui même, leur effet est très fortement réduit.

Pour utiliser de telles voiles, il est donc nécessaire de stabiliser le satellite et donc d'utiliser ses systèmes de contrôle d'attitude ce qui ramène au problème vu précédemment de la conservation de fonctions de pilotage et de propulsion du satellite en fin de vie.

Il a été aussi envisagé d'utiliser les panneaux solaires des satellites comme surface de freinage mais cette technologie reste trop lourde, compliquée à mettre en oeuvre et souvent insuffisante.

La présente invention concerne une technologie de dispositif d'aérofreinage, applicable à la désorbitation des satellites, basée sur une voile perfectionnée en ce qu'elle reste peu volumineuse repliée, en ce qu'elle nécessite une ossature réduite et en ce qu'elle nécessite peu d'énergie pour son déploiement ce qui lui conserve un bilan de masse réduit et une fiabilité importante compatible avec son utilisation en fin de vie du satellite.

En outre, de manière particulièrement avantageuse, la voile selon l'invention est conçue en sorte de fonctionner en ralentisseur quelque soit l'attitude du satellite et en sorte de permettre d'éviter de le stabiliser ce qui évite d'accroître la masse du satellite et évite de conserver des ergols de propulsion après la fin de la mission du satellite.

Pour ce faire la présente invention prévoit un dispositif d'aérofreinage de satellite selon la revendication 1, comportant une voilure déployable pour lequel la voilure une fois déployée est une structure tridimensionnelle adaptée pour réaliser le freinage d'un satellite instable quelque soit son orientation.

Une telle structure tridimensionnelle selon l'invention permet de conserver une efficacité de freinage importante quelque soit la position du satellite sur sa trajectoire sans être conçue pour apporter une stabilisation du satellite.

En particulier, selon un mode de réalisation préférentiel de l'invention, la voilure déployée est telle que sa section efficace reste, quelque soit la position du satellite sur sa trajectoire, dans un rapport compris entre 2,8 fois la surface de la projection du satellite perpendiculairement à sa trajectoire et 5 fois ladite surface de projection ce qui permet d'assurer une désorbitation du satellite dans un temps raisonnable tout en réduisant la masse embarquée due au dispositif d'aérofreinage.

Selon l'invention, la structure tridimensionnelle est une structure dissymétrique qui optimise le rapport section efficace sur masse embarquée.

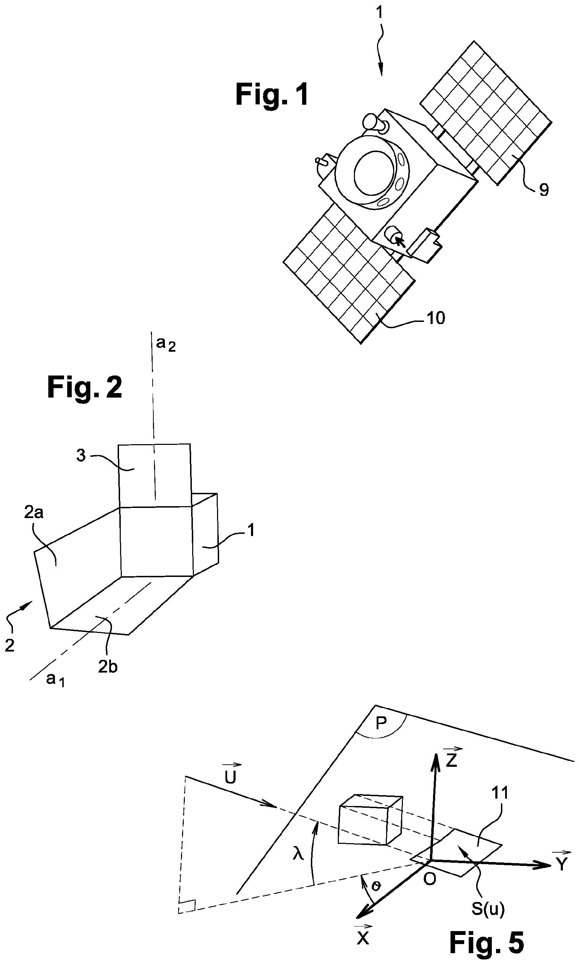

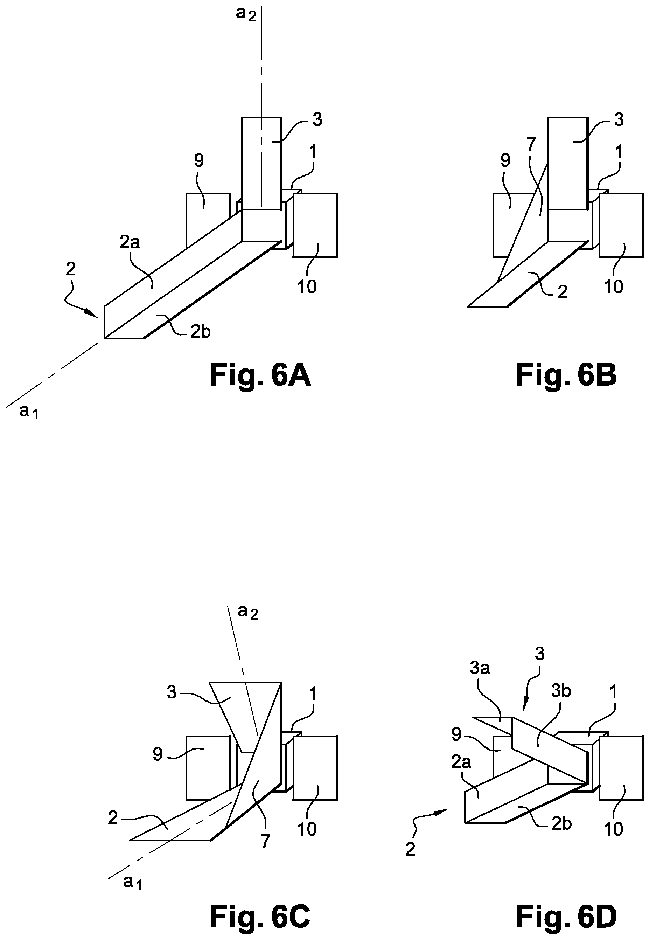

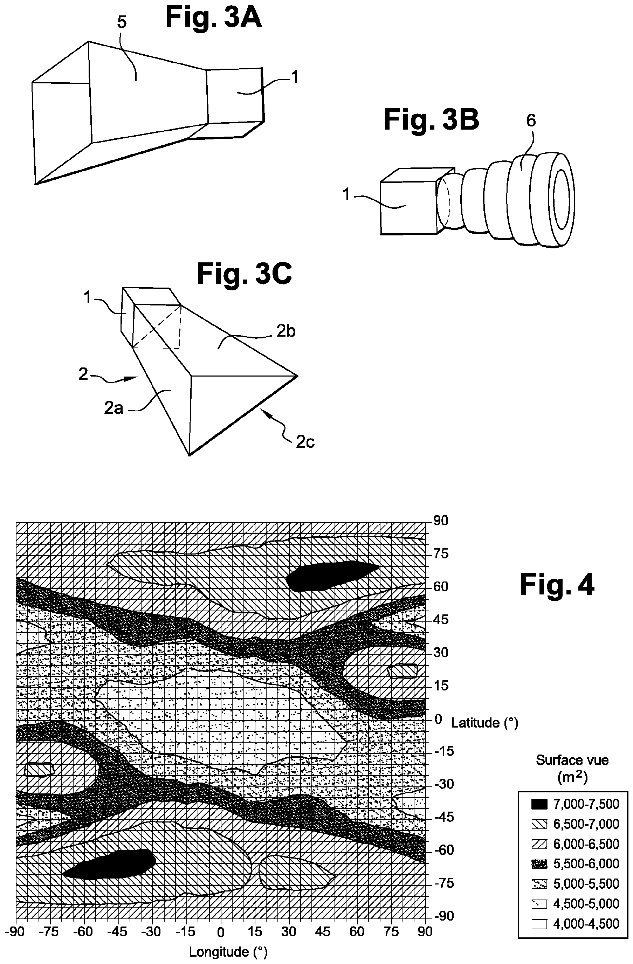

D'autres caractéristiques et avantages seront apparents à la lecture de la description qui va suivre d'exemples non limitatifs de l'invention en référence aux dessins qui représentent:
en figure 1: une vue en perspective d'un satellite auquel s'applique l'invention;
en figure 2: une vue en perspective d'un premier exemple d'un premier mode de réalisation de l'invention;
en figure 3A à 3C: des vues en perspective de trois exemples d'un troisième mode de réalisation de l'invention en perspective;
en figure 4: un diagramme en deux dimensions représentatif de la section efficace d'un mode de réalisation de l'invention;
en figure 5: une illustration du calcul de section efficace;
en figures 6A à 6D: quatre exemples du premier mode de réalisation de l'invention.

Le dispositif d'aérofreinage de satellite selon l'invention s'applique particulièrement à un satellite 1 tel que représenté en figure 1 de type micro-satellite pourvu de générateurs solaires 9, 10 de masse de l'ordre de 200 kg, de surface projetée moyenne de 1,5m², soit une rapport surface projetée sur masse de l'ordre du rapport donné en préambule, et placé sur une orbite située entre 650 et 800 km d'altitude.

Selon l'invention, le dispositif de désorbitation comporte une la voilure, souple ou rigide qui, une fois déployée devient une structure tridimensionnelle 2 selon la figure 2, 3 selon les figures 6A et 6D, 2, 3 et 6 selon les figures 6B et 6C, 5 selon la figure 3A et 6 selon la figure 3B, comportant, soit des éléments de voilure situés dans des plans sécants non confondus, soit un ou plusieurs éléments de voilure formant des faces externes d'un objet tridimensionnel.

Selon l'invention la structure tridimensionnelle est adaptée pour réaliser le freinage d'un satellite instable c'est à dire qu'elle présente une section efficace qui accroît la surface apparente du satellite lors de la rotation du satellite sur sa trajectoire et pratiquement quelque soit l'attitude du satellite, ce sans stabiliser le satellite dans une position particulière.

Dans le cas de l'invention, la pression de l'air résiduel ne permet pas d'auto stabilisation de la position du satellite et l'invention est particulièrement intéressante du fait qu'elle évite de devoir stabiliser le satellite, ce contrairement au cas d'une voile de type "parapluie" qui n'est efficace que pour un satellite stable et orienté sur sa trajectoire et disposé en avant de la voile sur cette trajectoire.

Dans le cadre de l'invention, pour l'exemple de satellite choisi, la voilure déployée est telle que sa section efficace reste, quelque soit la position du satellite sur sa trajectoire, dans un rapport compris entre 2,8 fois la surface de la projection 11 du satellite perpendiculairement à sa trajectoire et 5 fois ladite surface de projection 11.

La figure 5 illustre le calcul de la section efficace.

On appelle section efficace la surface projetée S(u) de la structure 1 sur un plan P normal à la direction d'observation.

Pour mesurer la section efficace on définit en premier lieu une direction d'observation de référence en observant le satellite suivant son axe de symétrie.

Ensuite, en faisant tourner le satellite selon des angles θ et λ pour obtenir les différentes attitudes possibles du satellite, il est possible de tracer l'évolution de la surface apparente du satellite selon ses attitudes possibles sur sa trajectoire.

Une valeur moyenne de cette surface peut ainsi être déduite.

Dans le cas d'un satellite d'une masse de l'ordre de 200 Kg dont la surface apparente de freinage, lorsque ses générateurs sont déployés varie de 0,44 m² à 2,45 m² soit 1,4 m² en moyenne, pour le freinage qu'apporte la voilure soit compatible avec une désorbitation en moins de 25 ans, la surface apparente moyenne doit être de l'ordre de 4 m².

Cette méthode permet de déterminer les géométries de voilures les mieux adaptées pour offrir un rapport section efficace de la voilure sur masse embarquée le meilleur possible et un déploiement aisé.

Selon l'invention, la voilure comporte au moins deux éléments de voilure disjoints 2, 3 comme représenté plus particulièrement aux figures 6A à 6D qui correspondent à des exemples de réalisation plus particulièrement applicable à un satellite pourvu de générateurs solaires 9, 10 en forme de panneaux. Pour ces exemples de réalisation la voilure s'étend globalement selon un plan perpendiculaire au plan comprenant les panneaux solaires de sorte et ces derniers participent ainsi à l'aérofreinage du satellite.

Dans ce cadre plusieurs configurations de voilures ont été déterminées et selon une configuration particulière, l'invention prévoit que la voilure comporte au moins un premier élément de voilure 2 orienté parallèlement à un premier axe a1 du satellite et un second élément de voilure 3 orienté parallèlement à un second axe a2 du satellite, distinct du premier.

Selon l'exemple des figures 6A, 6B, lesdits premier et second axes a1, a2 sont des axes perpendiculaires alors que selon les figures 6C, 6D, les axes a1, a2 sont des axes inclinés l'un par rapport à l'autre d'un angle inférieur à 90°.

Pour accroître la surface d'aérofreinage, selon les exemples des figures 6B et 6C, lesdits éléments de voilure 2, 3 sont reliés par un troisième élément de voilure 7 se déployant simultanément aux premier et deuxième éléments de voilure.

Selon un mode de réalisation alternatif ou complémentaire représenté notamment en figure 2, la voilure comprend au moins un élément de voilure 2, 3 pourvu de deux volets 2a, 2b, 3a, 3b comportant une arête commune.

En particulier, ladite arête commune s'étend à partir du contour extérieur du satellite selon un axe a1 s'éloignant du satellite.

L'exemple de la figure 6D prévoit pour sa part deux éléments de voilure 2, 3 chacun pourvu de deux volets respectivement 2a, 2b et 3a, 3b.

Dans le cas d'un angle de 105° entre les axes a1 et a2 et une longueur des éléments de voilure de l'ordre de 4,5 m et des largeurs de panneaux de l'ordre de 0,6 m la surface vue en fonction de la position du satellite sur sa trajectoire est représentée en figure 4.

On s'aperçoit sur cette figure que la structure tridimensionnelle offre une surface efficace se situant entre 4 et 7,5 m² ce qui permet de freiner le satellite instable sur sa trajectoire dans toutes les positions qu'il peut occuper.

Selon une alternative non revendiquée, la voilure est une structure évasée 5, 6 se déployant à partir d'un élément de contour du satellite.

Dans ce cas, la structure évasée peut être pyramidale comme dans l'exemple de la figure 3A, sous forme tronconique en succession d'éléments de tore comme dans la figure 3B, comprendre trois panneaux 2a, 2b et 2c formant un prisme évasé à base triangulaire partant d'une face du satellite comme selon l'exemple de la figure 3C.

L'invention ne se limite pas aux exemples représentés et notamment il peut être prévu plus de deux éléments de voilure disjoints.

En outre, l'invention s'applique à tout objet en orbite et notamment, par la terminologie satellite on englobe également des éléments de lanceurs ou de structures orbitales dont la désorbitation est souhaitée.

## Revendications

1. Dispositif d'aérofreinage de satellite (1) comportant une voilure déployable **caractérisé en ce que** la voilure une fois déployée est une structure tridimensionnelle (2, 3, 5, 6, 7) dissymétrique adaptée pour réaliser le freinage d'un satellite instable quelque soit son orientation et pour lequel la voilure comporte au moins deux éléments de voilure (2, 3) disjoints.

2. dispositif d'aérofreinage selon la revendication 1 **caractérisé en ce que** la voilure déployée est telle que sa section efficace reste, quelque soit la position du satellite sur sa trajectoire, dans un rapport compris entre 2,8 fois la surface de la projection (11) du satellite perpendiculairement à sa trajectoire et 5 fois ladite surface de projection (11).

3. dispositif d'aérofreinage selon l'une des revendications précédentes **caractérisé en ce que** la voilure comporte au moins un premier élément de voilure (2) orienté parallèlement à un premier axe (a1) du satellite et un second élément de voilure (3) orienté parallèlement à un second axe (a2) du satellite, distinct du premier.

4. dispositif d'aérofreinage selon la revendication 3 **caractérisé en ce que** lesdits premier et second axes (a1, a2) sont des axes perpendiculaires.

5. dispositif d'aérofreinage selon l'une des revendications 1 à 3 **caractérisé en ce que** la voilure comprend au moins un élément de voilure (2, 3) pourvu de deux volets (2a, 2b, 3a, 3b) comportant une arête commune.

6. dispositif d'aérofreinage selon la revendication 5 **caractérisé en ce que** ladite arête commune s'étend à partir du contour extérieur du satellite selon un axe (a1, a2) s'éloignant du satellite.

7. dispositif d'aérofreinage selon la revendication 1 **caractérisé en ce que** lesdits éléments de voilure (2, 3) sont reliés par un troisième élément de voilure (7).

## Patentansprüche

1. Vorrichtung zur Atmosphärenbremsung von Satelliten (1), umfassend einen entfaltbaren Flügel, **dadurch gekennzeichnet, dass** der einmal entfaltete Flügel eine asymmetrische dreidimensionale Struktur ist (2, 3, 5, 6, 7), die dafür geeignet ist, die Bremsung eines instabilen Satelliten unabhängig von dessen Ausrichtung auszuführen, und wobei der Flügel wenigstens zwei getrennte Flügelelemente (2, 3) umfasst.

2. Vorrichtung zur Atmosphärenbremsung nach Anspruch 1, **dadurch gekennzeichnet, dass** der entfaltete Flügel solcherart ist, dass sein wirksamer Abschnitt, unabhängig von der Position des Satelliten auf seiner Flugbahn, in einem Verhältnis zwischen dem 2,8-Fachen der Projektionsoberfläche (11) des Satelliten senkrecht zu seiner Flugbahn und dem 5-Fachen der Projektionsoberfläche (11) bleibt.

3. Vorrichtung zur Atmosphärenbremsung nach einem der vorhergehenden Ansprüche, **dadurch gekennzeichnet, dass** der Flügel wenigstens ein erstes, parallel zu einer ersten Achse (a1) des Satelliten ausgerichtetes Flügelelement (2) und ein zweites, parallel zu einer zweiten Achse (a2) des Satelliten ausgerichtetes Flügelelement (3) umfasst, das sich von dem ersten unterscheidet.

4. Vorrichtung zur Atmosphärenbremsung nach Anspruch 3, **dadurch gekennzeichnet, dass** die erste und die zweite Achse (a1, a2) senkrechte Achsen sind.

5. Vorrichtung zur Atmosphärenbremsung nach einem der Ansprüche 1 bis 3, **dadurch gekennzeichnet, dass** der Flügel wenigstens ein mit zwei Komponenten (2a, 2b, 3a, 3b) mit einem gemeinsamen Grat ausgestattetes Flügelelement (2, 3) umfasst.

6. Vorrichtung zur Atmosphärenbremsung nach Anspruch 5, **dadurch gekennzeichnet, dass** sich der gemeinsame Grat vom äußeren Umfang des Satelliten gemäß einer sich von dem Satelliten entfernenden Achse (a1, a2) erstreckt.

7. Vorrichtung zur Atmosphärenbremsung nach Anspruch 1, **dadurch gekennzeichnet, dass** die Flügelelemente (2, 3) durch ein drittes Flügelelement (7) verbunden sind.

## Claims

1. A satellite (1) aerobraking device including a deployable wing **characterized in that** the wing, once deployed, is an asymmetrical three-dimensional structure (2, 3, 5, 6, 7) adapted to achieve the braking of an unstable satellite regardless of its orientation and for which the wing includes at least two disjoint wing elements (2, 3).

2. The aerobraking device according to claim 1 **characterized in that** the deployed wing is such that its cross section remains, regardless of the position of the satellite on its path, in a ratio comprised between 2.8 times the surface of the projection (11) of the satellite perpendicularly to its path and 5 times said projection surface (11).

3. The aerobraking device according to any of the preceding claims **characterized in that** the wing includes at least a first wing element (2) oriented parallel to a first axis (a1) of the satellite and a second wing element (3) oriented parallel to a second axis (a2) of the satellite, distinct from the first one.

4. The aerobraking device according to claim 3 **characterized in that** said first and second axes (a1, a2) are perpendicular axes.

5. The aerobraking device according to any of claims 1 to 3 **characterized in that** the wing comprises at least one wing element (2, 3) provided with two flaps (2a, 2b, 3a, 3b) including one common edge.

6. The aerobraking device according to claim 5 **characterized in that** said common edge extends from the outer contour of the satellite along an axis (a1, a2) away from the satellite.

7. The aerobraking device according to claim 1 **characterized in that** said wing elements (2, 3) are connected by a third wing element (7).
